# EUROPEAN PATENT APPLICATION

(11) **EP 0 606 568 A1**
(43) Date of publication of application: **20.07.1994**
(21) Application number: 93119163.9
(22) Date of filing: 27.11.1993
(51) Int. Cl.: B62J 1/16, A47D 1/06

(54) **Multiple-position safety seat for transporting children by bicycle**

(30) Priority: 12.01.1993 IT BG930001
(71) Applicant: STAMP S.r.l., I-24060 Telgate (Bergamo) (IT)
(72) Inventor: Erli, Pierangelo, I-24060 Telgate (Bergamo) (IT)
(74) Representative: Luksch, Giorgio, Dr.-Ing.

(57) **Abstract**

This safety seat for transporting children by bicycle possesses the characteristic of being associated with its own projecting support (1), consisting of a steel rod suitably bent to U shape in a horizontal plane (7B,7C) and bent through a 90⁰ angle in a vertical plane (7A) at its ends in order to be able to be located on the bicycle either in a frontal position (9') with the front of the child facing backwards, or in a more rearward position (9'') with the front of the child facing forwards.

The seat is also provided with a transverse safety bar (12) hinged (13) laterally to be able to be removed for the positioning and withdrawal of the child, after releasing a snap-locking device (14) provided on the other end of the bar.

## Description

This invention relates to a multiple-position safety seat for transporting children by bicycle.

As is well known, the bicycle has always formed a useful and tranquil vehicle for transporting children, as they derive pleasure therefrom.

For this reason, suitable child-carrying seats for application to any part of the bicycle have always been available.

The available types have however little facility for adjustment or positioning. They are fixed directly to the bicycle and therefore suffer the violence of typical impacts undergone by the bicycle due to the roughness of the road surface.

The child is generally held in by hardly practical harnesses or straps.

An object of the present invention is to define a bicycle seat able to considerable provide transport safety.

A further object is to define a seat which can be positioned either with its front facing forwards or with its front facing backwards relative to the direction of movement of the bicycle.

A further object is to define means for fixing the seat to the bicycle structure which are releasable, to enable the child to be transferred without removing him from the seat in which he is seated.

A further object is to define removable fixing means which are of instinctive manoeuvrability.

A further object is to define fixing means suitable for bicycles in general.

A further object is to provide the seat with means able to damp impacts deriving from road roughness.

A further object is to provide the seat with impact damping means having an adjustable damping capacity.

A further object is to define means for retaining the child in the seat which provide him with an instinctive grip and/or support.

A further object is to define child retention means which are comfortable and of fast operation.

These and further objects which will be apparent on reading the following detailed description, defining a safety seat for transporting children by bicycle characterised by being associated with its own projecting support, consisting of a steel rod suitably bent to U shape in a horizontal plane and bent through a 90° angle in a vertical plane at its ends, in order to be able to be located on the bicycle either in a frontal position with the front of the child facing backwards, or in a more rearward position with the front of the child facing forwards.

The seat is also provided with a transverse safety bar hinged laterally to be able to be removed for the positioning and withdrawal of the child, after releasing a snap-locking device provided on the other end of the bar.

The seat is positionable on its support in various ways determined by sliding the two constituent parallel rods of the support within holes provided within its lower vertical wall and inserting the horizontal transverse portion of the support in predetermined recesses.

The invention is illustrated by way of non-limiting example on the accompanying drawings, in which:
Figure 1 is a side sectional view on a longitudinal central plane showing a seat mounted on the front of a bicycle ;
Figure 2 is a top sectional view on a horizontal plane at the bar level showing a seat with said closure bar in a partly open position.

With reference to the aforesaid figures, on a head tube 1 there is fixed by bolts 2 a fixing block 3 consisting of two half-blocks clamped together, one 3A being of plastics and the other 3B being of metal.

Said fixing block hence defines a large central hole with its axis 4 coinciding with the axis of the head tube 1 and hence inclined with the typical "angle of incidence" of this latter.

At the sides of the recess in the plastics half-block 3A and forming said central hole there are two holes 5A and 5B of vertical axis.

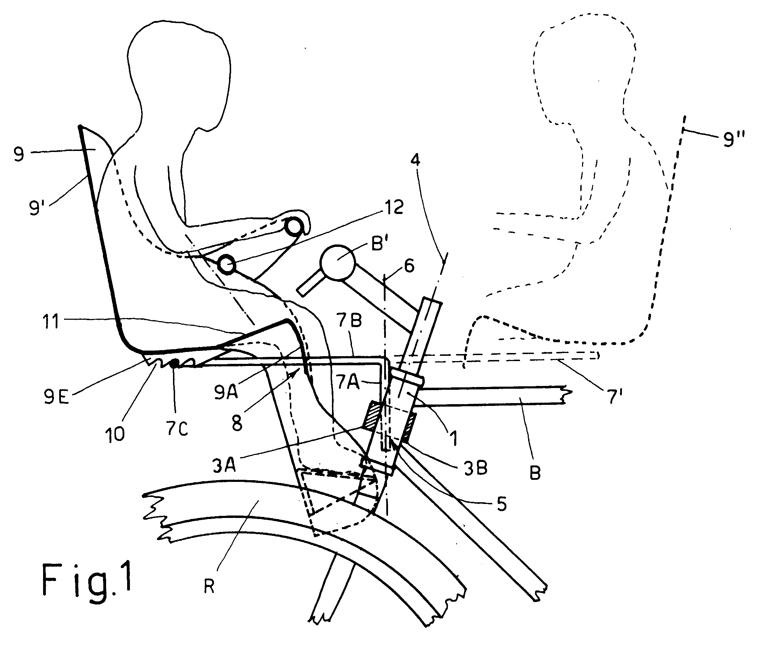

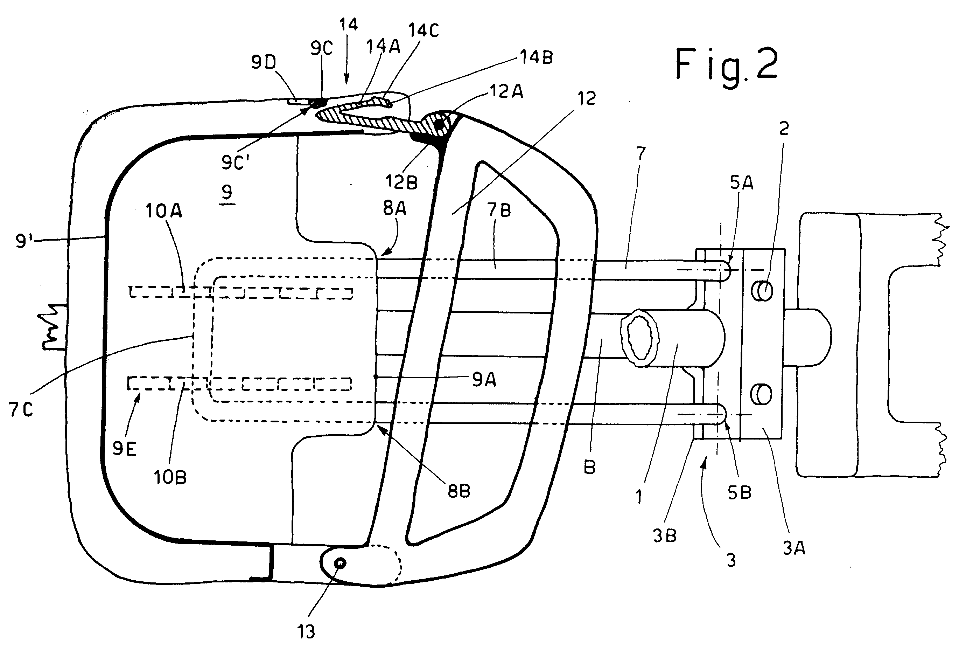

The purpose of these holes is to receive the ends 7A of a projecting support 7 consisting of a steel rod bent to U-shape (as shown in Figure 2) in a horizontal plane and bent through an angle of 90° (as shown in Figure 1) in a vertical plane.

With this configuration, the horizontal portions 7B of the projecting support 7 can penetrate through two holes 8, shown as 8A and 8B in Figure 2, provided in a vertical wall 9A of a plastics seat 9. The transverse horizontal portion 7C formed by the "base of the U" is housed by slight forcing within recesses 10, indicated as 10A and 10B in Figure 2, forming a sawtooth profile on two projecting ribs 9E provided on the underside of the seating base of the seat (and hence shown in Figure 2 by dashed lines).

The closer to the vertical wall the recesses 10 in which the horizontal portion 7C is housed, the further the seat 9 from the vertical holes 5 (or 5A, 5B) provided for fixing the ends 7A of the projecting support 7. Hence proportionally greater bending moments are created for equal weights of the child seated in said seat, they hence being able to impress on the projecting support 7 greater elastic flexure, leading to greater springing or comfort during travel.

The vertical ends 7A of the projecting support 7 are maintained within the two holes 5A and 5B both by gravity and by the fact that any jerking of the seat 9 creates a moment which subjects the two ends 7A to considerable sliding friction within their housings, such as to stop them moving.

However by manual manipulation with its inherent sensitivity, said moment can be neutralized to enable the seat to be raised by withdrawing the two ends 7A from their housing holes 5. The seat can hence be transferred with the child seated in it, and set down anywhere. It can also be again fixed to the holes 5A, 5B in a front-facing position. In Figure 1 said front-facing position is indicated by dashed lines 9'' expressing the sectional profile of the seat, which in its other position is indicated by 9'.

A further important feature of the seat is the simple and functional manner in which it provides secure retention for the child. Said retention is achieved by the following two expedients. One is a central surface 11 which lies between the legs of the child and is of considerable inclination so that the child is unable to slip up it. The other safety expedient is a transverse bar 12 positioned in front of the child's chest and being of various shapes, such as the double shape shown in Figure 2.

Said bar 12 is securely hinged to one side of the seat by a pin 13 and is free to engage the other side of the seat via an operable spring latch device 14. Said device consists of a projecting V-shaped oblique prong 14A which is flexed or squeezed by the sliding contact exerted by a fixed stop 9C when closing the bar 12 or moving it towards the body of the seat 9. After it has passed beyond said stop 9C, the prong elastically widens to its initial V shape to engage its terminal edge 14B against the rear edge 9C' of the stop 9C.

The facility for this elastic expansion to implement said engagement is provided by a hole 9D through which a conjugate surface 14C of the prong 14 can be inserted. Said surface hence acts as a pushbutton, which when pressed results in disengagement of the parts to enable the bar to be opened in order to lift the child from the seat. The oblique prong 14A is preferably made rigid with the transverse bar 12 by a pivot pin 12A. In this manner it can be rotated in a clockwise direction (with reference to the drawing) so that it can no longer engage when the seat is not in use, hence ensuring that the transverse bar can be easily opened by rotating it about its pivot 13 when the child is to be placed in the seat. When the child has been positioned in the seat the oblique prong 14A is returned to the position shown in Figure 2 and defined by a stop portion 12B. Said stop portion is indicated as sectioned by being coloured black, in the same manner as the particularly thick lines which indicate the sectioned tubular walls of the double double transverse bar 12.

## Claims

1. A safety seat for transporting children by bicycle, characterised by being associated with its own projecting support (7) consisting of a steel rod suitably bent to U shape in a horizontal plane (7B, 7C) and bent through a 90° angle in a vertical plane (7A), in order to be able to be located on the bicycle either in a frontal position (9') with the front of the child facing the cyclist, or in a more rearward position (9'') with the front of the child facing forwards, said facility for double positioning being provided by removable insertion of the two ends of said rod (7) into predetermined holes (5, 5A, 5B) in a fixing block (3, 3A, 3B) fixed to the head tube (1) of the bicycle (B).

2. A seat as claimed in the preceding claim, characterised by a transverse safety bar (12) hinged (13) laterally in order to be able to be removed for the positioning and withdrawal of the child, after releasing a snap-action or spring latch locking device (14) provided on the other end of the bar.

3. A seat as claimed in the preceding claim, comprising a snap-action or spring latch device characterised by a projecting oblique V-shaped prong (14A) which is flexed or squeezed by the sliding contact exerted by a fixed stop (9C) during the closure of the bar (12) or its movement towards the seat (9), to then widen or return elastically to its preceding rest-state V configuration after passing said stop (9C), to engage its terminal edge (14B) against the rear edge (9C') of the stop (9C), the facility for this elastic expansion to implement said engagement being provided by a hole (9D) through which a conjugate surface (14C) of the prong (14) can be inserted to act as a pushbutton for disengaging the parts.

4. A seat as claimed in the preceding claims, characterised by being positionable on its support in various ways determined by sliding the two parallel rods (7B) of the support (7) within holes (8A, 8B) provided within its lower vertical wall (9A) and inserting the horizontal transverse portion (7C) of the support in predetermined recesses (10).

5. A seat as claimed in the preceding claims, characterised by an oblique spring latch prong (14A) positioned on the transverse bar (12) by pivoting (12A), to rest against a stop portion (12B) for limiting travel in one direction.
